# EUROPEAN PATENT SPECIFICATION

(11) **EP 2 042 394 B1**
(45) Date of publication and mention of the grant of the patent: **03.08.2011**
(21) Application number: 07117474.2
(22) Date of filing: 28.09.2007
(51) Int. Cl.: B60S 1/38

(54) **Windscreen wiper device**
Scheibenwischvorrichtung
Dispositif d'essuie-glace

(43) Date of publication of application: 01.04.2009
(73) Proprietor: Federal-Mogul S.A., 6790 Aubange (BE)
(72) Inventor: Boland, Xavier, 6700, Arlon (BE)
(74) Representative: Hooiveld, Arjen Jan Winfried

(56) References cited:
- WO-A-2007/124989
- DE-A1- 10 350 274
- FR-A- 2 851 976
- US-A1- 2006 265 830
- US-B2- 7 210 189

## Description

The present invention relates to a windscreen wiper device comprising an elastic, elongated carrier element, as well as an elongated wiper blade to be placed in abutment with a windscreen to be wiped, said wiper blade comprising an elongated upper part and an elongated lower wiping part of a flexible material, wherein said upper part is provided with first retention means for retaining said lower wiping part, as well as with second retention means for retaining a longitudinal strip of said carrier element, said second retention means defining a longitudinal groove for inserting said longitudinal strip therein, said upper part being provided with a resilient member in the shape of a spoiler at a side thereof facing away from said lower wiping part, which windscreen wiper device comprises a connecting device for an oscillating arm, and wherein said oscillating arm can be pivotally connected to said connecting device about a pivot axis near one end thereof.

Such a windscreen wiper device is known from United States patent document no. 7,210,189 (Nacamuli). The windscreen wiper device described therein comprises a so-called blade body consisting of an upper support made of a flexible material and a lower support made of a semi-rigid material, wherein said upper support and said lower support are joined by co-extrusion to form said single blade body. The upper support supports and accommodates in its mounting channel, throughout its length, a longitudinal strip as called "vertebra" or "flexor". Said longitudinal strip is inserted lengthwise inside the mounting channel, as depicted in figure 7 of the above United States patent document. Said lower support has a lower mounting channel passing lengthwise throughout the length of the blade body, being rectangular in shape. A rubber element is inserted in said lower mounting channel.

United States patent publication no. 2006/0265830 (Walworth) describes a windscreen wiper device according to the preamble of claim 1.

A drawback of a windscreen wiper device known from United States patent documents no. 7,210,189 and no. 2006/0265830 is that said longitudinal strip and said mounting channel on the upper support should be dimensioned carefully and accurately in order to realize a close fit therebetween, so that intricate and expensive tools are required to manufacture them. If said longitudinal strip is too large, it cannot be inserted in said mounting channel. If said longitudinal strip is too small, it rests within said mounting channel with play, with all negative consequences involved, such as wear.

It is an object of the invention to improve the prior art, that is to improve a windscreen wiper device known from the above United States patent documents, wherein a close fit is obtained between said longitudinal strip and said mounting channel.

In order to accomplish that objective, a windscreen wiper device of the kind referred to in the introduction is characterized according to the invention in that said spoiler is made of a softer material than said second retention means to allow said bending. Particularly, said connecting pieces are connected to said upper part and/or to said longitudinal strip. The present invention makes it possible to realize a close fit between said longitudinal strip and said longitudinal groove, also in the case that said longitudinal strip is larger or smaller in width than said longitudinal groove. Said spoiler can be deformed so as to allow a bending of said second retention means in lateral and outward direction, thereby enabling a mounting of said longitudinal strip into said longitudinal groove.

It is noted that the invention is not restricted to use with passenger cars, but it can also be used with trains and other fast vehicles.

In one preferred embodiment of a windscreen wiper device in accordance with the invention said second retention means are semi-rigid. This semi-rigid material of said second retention means ensures that on the one hand a bending of said second retention means in lateral and outward direction is made possible upon mounting of said longitudinal strip into said longitudinal groove, and on the other hand a reliable and solid retention of said longitudinal strip in said longitudinal groove as defined by said second retention means is made possible.

In another preferred embodiment of a windscreen wiper device according to the invention said first retention means and said second retention means are integral. Accordingly, a cheap though effective product in one piece is obtained without the need of coextrusion as described in the above United States patent document.

In another preferred embodiment of a windscreen wiper device in accordance with the invention said second retention means are hook-shaped. In other words, these hooks, preferably extending along the entire length of said wiper blade, define said longitudinal groove between them and are able to bend in lateral and outward direction to allow mounting of said longitudinal strip therein. In said bended position said hooks firmly grip said longitudinal strip, thereby avoiding any longitudinal, lateral or transversal movement of said longitudinal strip in said longitudinal groove.

In another preferred embodiment of a windscreen wiper device according to the invention said longitudinal groove has a rectangular cross-section. In another preferred embodiment said longitudinal groove has an arc-shaped cross-section. Said arc-shaped cross-section could be symmetrical or asymmetrical with respect to a plane perpendicular to said longitudinal strip.

In another preferred embodiment of a windscreen wiper device in accordance with the invention said first retention means comprise downwardly extending arms, seen in cross-section, for pivotally engaging said lower wiping part. In other words, a mechanical articulation is realized between said upper part and said lower part, wherein said upper part holds said lower part allowing said lower part to make pivotal or hingeable movements relative to said upper part. In use said pivotal movements of said lower part correspond to the oscillatory movements of said oscillating arm. Due to said mechanical articulation said lower part will not have to bend to follow the oscillatory movements of said oscillating arm, so that a permanent deformation of said lower part as a result of stress in the rubber thereof is avoided.

In another preferred embodiment of a windscreen wiper device according to the invention said lower wiping part comprises a wiping lip, a neck extending from said wiping lip, as well as an enlarged head extending from said neck, and wherein said enlarged head is mounted in a hollow chamber defined by said arms of said first retention means. Particularly, said enlarged head has a circular, elliptical, square, rectangular, rhomboid or heart-shaped cross-section. Said wiping lip is placed in abutment with a windscreen to be wiped. Said wiping lip, said neck and said enlarged head particularly are in one piece and extend in longitudinal direction along the entire length of the wiper blade.

In another preferred embodiment of a windscreen wiper device in accordance with the invention said arms of said first retention means comprise inwardly extending end parts, and wherein said neck is located at least partially between said end parts and the enlarged head is located above said end parts. In other words, said enlarged head is confined in said hollow chamber, wherein said hook-shaped end parts further retain said lower part onto said upper part. Preferably, said hollow chamber comprises a lubricant in order to allow smooth pivotal movements of said lower part without wear.

The invention will now be explained in more detail with reference to figures illustrated in a drawing, wherein:
- figure 1 shows a perspective view of a windscreen wiper device according to a preferred embodiment of the invention;
- figures 2 and 3 are a cross-section of the windscreen wiper device of figure 1 at the location of a connecting device for an oscillating arm and at the location of a connecting piece for a longitudinal strip of a carrier element, respectively;
- figures 4 through 6 refer to different embodiments, seen in cross-section, of an upper part and a lower part of a wiper blade of the windscreen wiper device of figure 1.

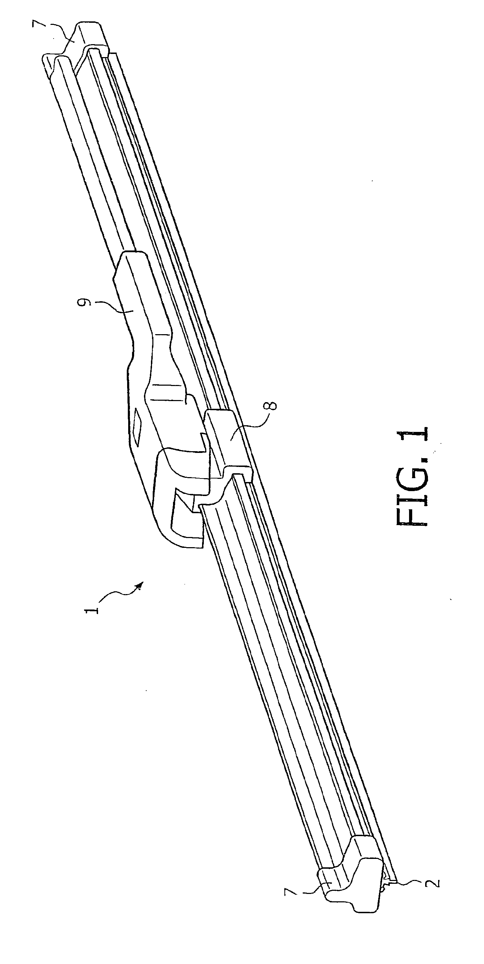

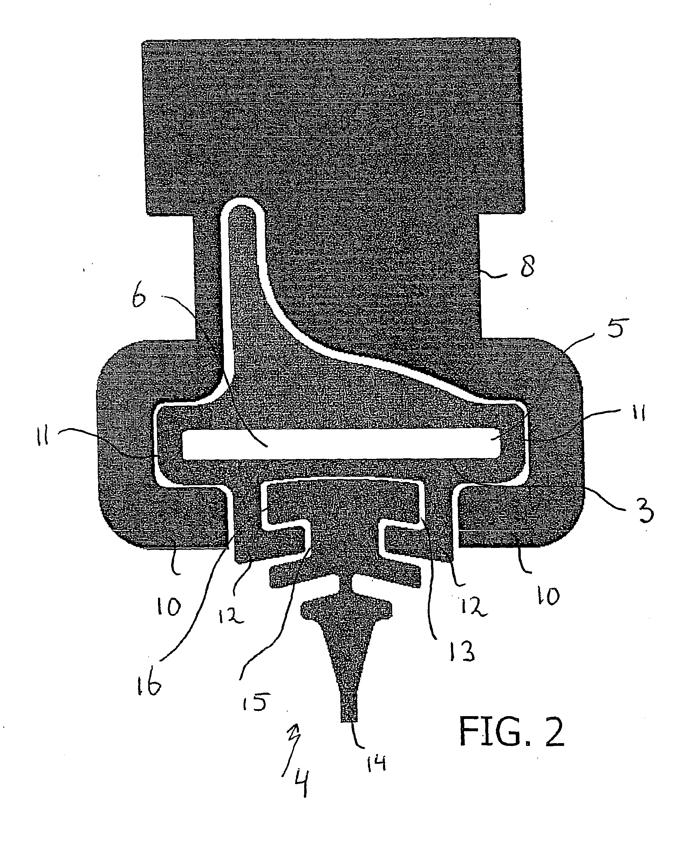

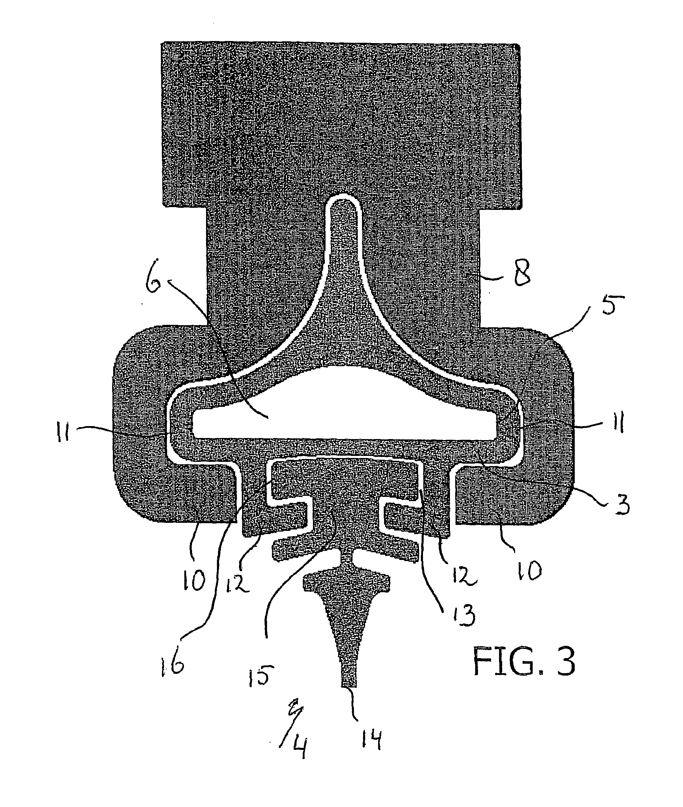

Figure 1 shows a preferred variant of a windscreen wiper device 1 according to the invention. Said windscreen wiper device 1 is built up of a wiper blade 2 consisting of a plastic elongated upper part 3 and an elastomeric elongated lower wiping part 4, both extending in longitudinal direction along the entire length of said wiper blade 2. In the upper part 3 a central longitudinal groove 5 is formed, in which a longitudinal strip 6 made of spring band steel is fitted (figures 2 and 3). Said strip 6 forms a flexible carrier element for the rubber wiper blade 2, as it were, which is thus biased in a curved position (the curvature inoperative position being that of a windscreen to be wiped). Outer ends of said strip 6 are connected on either side of the windscreen wiper device 1 to connecting pieces 7 functioning as clamping members. In this embodiment, the connecting pieces 7 are separate constructional elements, which may be form-locked as well as force-locked to the outer ends of said strip 6. In another preferred variant, said connecting pieces 7 are in one piece with the strip 6 made of spring band steel.

The windscreen wiper device 1 is furthermore built up of a connecting device 8 of plastic or metallic material for an oscillating wiper arm 9. Said connecting device 8 comprises clamping members 10 that are integral therewith, which engage round longitudinal sides 11 of the upper part 3 that face away from each other, as a result of which the connecting device 8 is firmly attached to the unit consisting of the upper part 3 and the strip 6. The oscillating wiper arm 9 is pivotally connected to the connecting device 8 about a pivot axis near one end thereof.

As can be seen from figures 2 and 3, said upper part 3 is provided with downwardly extending arms 12 in one piece therewith, seen in cross-section, thus defining a hollow chamber or space 13, again seen in cross-section. Said hollow chamber 13 extends in longitudinal direction along the entire length of said wiper blade 2, so as to form a channel with two open outer ends. Again referring to figures 2 and 3, said wiping part 4 consists of a wiping lip 14, a neck 15 extending from said wiping lip 14, as well as an enlarged head 16 extending from said neck 15 and having a rectangular cross-section. Said parts 3,4 are slidably connected to each other, wherein said enlarged head 16 of said wiping part 4 is slidably mounted into said hollow channel of said holding part 3. One of said open ends of said channel forms an entrance through which said wiping part 4 as a separate construction element can be slid by hand into said channel until said wiping part 4 is finally retained onto said upper part 3 (the first or holding position). Said open end also acts as an exit through which said wiping part 4 can be slid by hand from the first position until said wiping part 4 as a separate "loose" construction element can be replaced or repaired (the second position). The arms 12 of said upper part 3 pivotally engage the enlarged head 16 of said wiping part 4, so as to allow a pivotal or hingeable movement of said wiping part 4 when the oscillating wiper arm 9 attached to said upper part 3 makes a corresponding oscillatory movement.

Figure 3 corresponds to figure 2, but now relating to a different embodiment of said upper part 3 of said wiper blade 2 of the windscreen wiper device 1 of figure 1, wherein corresponding parts have been designated with the same reference numerals.

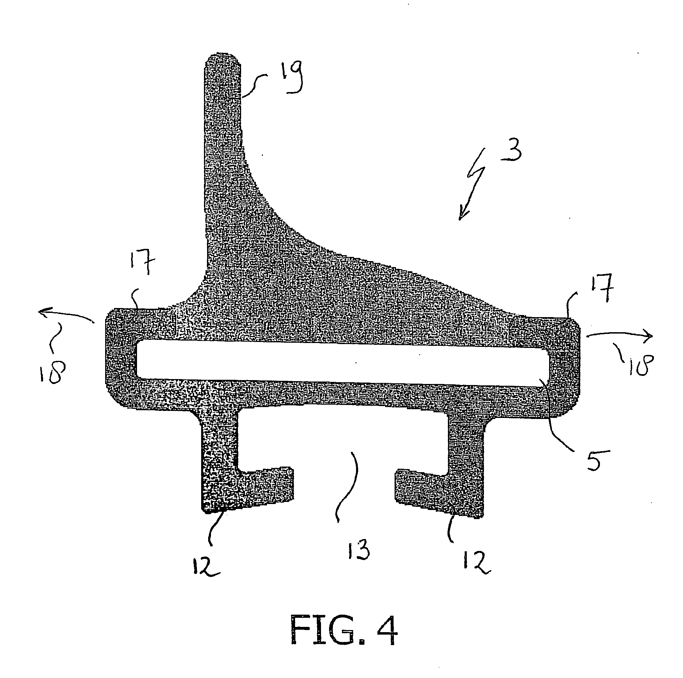

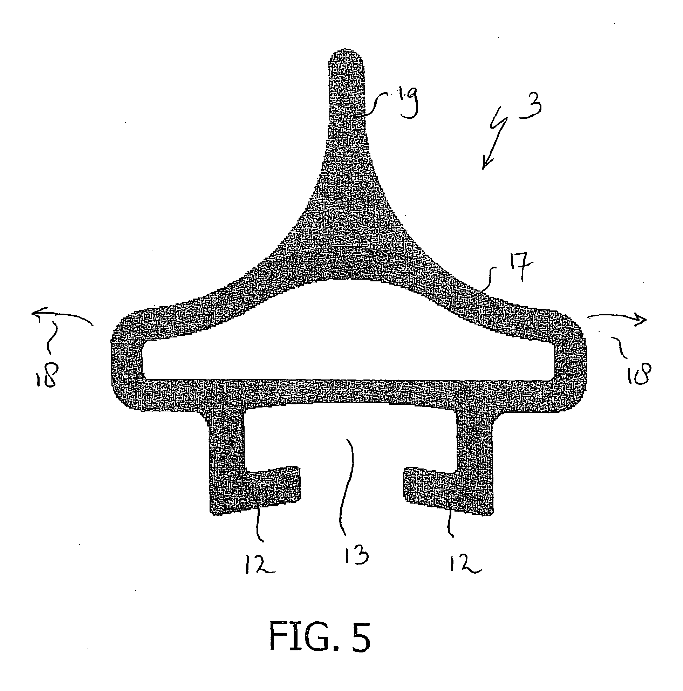

Figures 4 and 5 show a cross-section of the upper parts 3 of figures 2 and 3, respectively, wherein corresponding parts have been designated with the same reference numerals. As can be seen from figure 4, the upper part 3 comprises said first retention means in the form of said arms 12 for retaining said lower wiping part 4, as well as said second retention means in the form of semi-rigid hooks 17 for retaining said longitudinal strip 6. Said hooks 17 define said longitudinal groove 5 having a rectangular cross-section for inserting said longitudinal strip 6 therein, wherein said hooks 17 are able to bend in lateral and outward direction in the direction of arrows 18 upon mounting of said longitudinal strip 6 into said longitudinal groove 5. In the preferred embodiment shown in figure 4 said arms 12 and said hooks 17 are made in one piece. A spoiler or air deflector 19 is present on a side of said upper part 3 which faces away from said lower wiping part 4, wherein said spoiler 19 is joined to said hooks 17 through coextrusion, glueing or the like. Said spoiler 19 is made of softer material than said hooks 17, so that said movement in the direction of the arrows 18 can take place without any problem. In figure 5 said second retention means define said longitudinal groove 5 having an arc-shaped cross-section for inserting said longitudinal strip 6 therein. Said second retention means are in the form of a closed wall 17 of said longitudinal groove 5, wherein side parts of said closed wall 17 are able to bend in lateral and outward direction in the direction of arrows 18 upon mounting of said longitudinal strip 6 into said longitudinal groove 5. Also in figure 5 said closed wall 17 and said arms 12 are in one piece, wherein a spoiler 19 is joined to said closed wall 17 through coextrusion, glueing or the like.

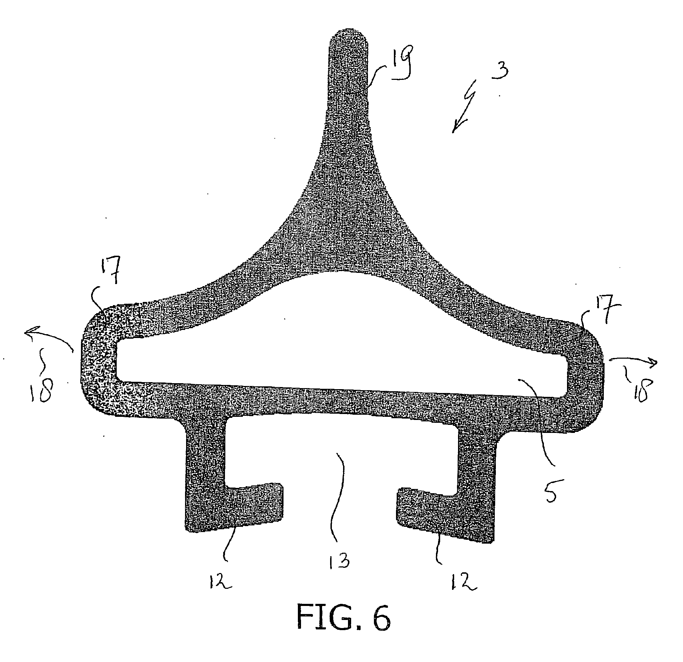

Figure 6 corresponds to figure 5, but now relating to a different embodiment of said upper part 3 of said wiper blade 2 of the windscreen wiper device 1 of figure 1, wherein corresponding parts have been designated with the same reference numerals. The second retention means are now in the form of the hooks 17 of figure 4, although said hooks 17 and a spoiler 19 joined thereto through coextrusion, glueing or the like form said longitudinal, arc-shaped groove 5, like in figure 5. Said spoiler 19 is made of a softer material than said hooks 17, in order to allow a laterally outward movement of said hooks 17.

The use of two materials differing in flexibility allows elastic deformation of said hooks 17 and/or said closed wall 17, as can be seen in figures 4, 5 and 6. Instead of elastic deformation, also plastic deformation could take place.

As can be seen from figures 2 and 3, the connector 8 is slid onto the upper part 3 once the longitudinal strip 6 is introduced inside the groove 5, thereby avoiding any deformation of the hooks 17 and/or the closed wall 17. Consequently, the longitudinal strip 6 is firmly confined inside the groove 5. In addition to or instead of the connector 8, also the connecting pieces 7 are arranged to prevent said deformation, thus taking care of confinement of the strip 6 inside the groove 5.

Although not depicted in the figures, it will be clear for a person skilled in the art that the oscillating wiper arm 9 is connected to a mounting head fixed for rotation to a shaft driven by a small motor. In use, the shaft rotates alternately in a clockwise and in a counter-clockwise sense carrying the mounting head into rotation also, which in turn draws the oscillating wiper arm 9 into rotation and by means of the connecting device 8 moves the wiper blade 2.

The invention is not restricted to the embodiments shown, but also extends to other preferred variants falling within the scope of the appended claims. For example, a skilled person would easily understand that the central longitudinal strip 6 of figures 2 and 3 could well be replaced by two longitudinal strips 6 located in correspondingly shaped grooves 5 in said upper part 3.

## Claims

1. A windscreen wiper device (1) comprising an elastic, elongated carrier element, as well as an elongated wiper blade (2) to be placed in abutment with a windscreen to be wiped, said wiper blade (2) comprising an elongated upper part (3) and an elongated lower wiping part (4) of a flexible material, wherein said upper part (3) is provided with first retention means for retaining said lower wiping part (4), as well as with second retention means for retaining a longitudinal strip (6) of said carrier element, said second retention means defining a longitudinal groove (5) for inserting said longitudinal strip (6) therein, said upper part (3) being provided with a resilient member in the shape of a spoiler (19) at a side thereof facing away from said lower wiping part (4), which windscreen wiper device (1) comprises a connecting device (8) for an oscillating arm (9), and wherein said oscillating arm (9) can be pivotally connected to said connecting device (8) about a pivot axis near one end thereof, wherein said second retention means are allowed to bend laterally outwardly upon insertion of said longitudinal strip (6) into said longitudinal groove (5), and wherein said longitudinal strip (6) is confined inside said longitudinal groove (5) upon mounting of said connecting device (8) and/or upon mounting connecting pieces (7) closing outer ends of said longitudinal groove (5) which has a closed circumference,
**characterized in that** said spoiler (19) is made of a softer material than said second retention means to allow said bending.

2. A windscreen wiper device (1) according to claim 1,
wherein said second retention means are semi-rigid.

3. A windscreen wiper device (1) according to claim 1,
wherein said first retention means and said second retention means are integral.

4. A windscreen wiper device (1) according to claim 1, 2 or 3, wherein said second retention means are hook-shaped.

5. A windscreen wiper device (1) according to any of the preceding claims 1 through 4, wherein said longitudinal groove (5) has a rectangular cross-section.

6. A windscreen wiper device (1) according to any of the preceding claims 1 through 4, wherein said longitudinal groove (5) has an arc-shaped cross-section.

7. A windscreen wiper device (1) according to any of the preceding claims 1 through 6, wherein said first retention means comprise downwardly extending arms (12), seen in cross-section, for pivotally engaging said lower wiping part (4).

8. A windscreen wiper device (1) according to claim 7,
wherein said lower wiping part (4) comprises a wiping lip (14), a neck (15) extending from said wiping lip (14), as well as an enlarged head (16) extending from said neck (15), and wherein said enlarged head (16) is mounted in a hollow chamber (13) defined by said arms (12) of said first retention means.

9. A windscreen wiper device (1) according to claim 8,
wherein said enlarged head (16) has a circular, elliptical, square, rectangular, rhomboid or heart-shaped cross-section.

10. A windscreen wiper device (1) according to claim 8 or 9, wherein said arms (12) of said first retention means comprise inwardly extending end parts, and wherein said neck (15) is located at least partially between said end parts and the enlarged head (16) is located above said end parts.

11. A windscreen wiper device (1) according to claim 8, 9 or 10, wherein said hollow chamber (13) comprises a lubricant.

## Patentansprüche

1. Scheibenwischervorrichtung (1), umfassend ein elastisches, längliches Trägerelement wie auch ein längliches Wischerblatt (2), das an einer zu wischenden Windschutzscheibe anliegend platziert werden soll, wobei das Wischerblatt (2) einen länglichen oberen Teil (3) und einen länglichen unteren Wischteil (4) aus einem flexiblen Material umfasst, wobei der obere Teil (3) mit ersten Haltemitteln versehen ist, um den unteren Wischteil (4) zu halten, wie auch mit zweiten Haltemitteln versehen ist, um einen Längsstreifen (6) des Trägerelements zu halten, wobei die zweiten Haltemittel eine Längsnut (5) definieren, um den Längsstreifen (6) darin einzusetzen, wobei der obere Teil (3) mit einem elastischen Element in der Form eines Spoilers (19) an einer Seite davon versehen ist, die von dem unteren Wischteil (4) weg weist, wobei die Scheibenwischervorrichtung (1) eine Verbindungsvorrichtung (8) für einen sich hin und her bewegenden Arm (9) umfasst, und wobei der sich hin und her bewegende Arm (9) um eine Schwenkachse schwenkbar nahe einem Ende davon mit der Verbindungsvorrichtung (8) verbunden werden kann, wobei es den zweiten Haltemitteln ermöglicht wird, sich beim Einsetzen des Längsstreifens (6) in die Längsrille (5) seitlich nach außen zu biegen, und
wobei beim Anbringen der Verbindungsvorrichtung (8) und/oder beim Anbringen von Verbindungsstücken (7), die die äußeren Enden der Längsrille (5) schließen, die einen geschlossenen Umfang aufweist, der Längsstreifen (6) innerhalb der Längsrille (5) eingeschlossen wird,
**dadurch gekennzeichnet, dass**
der Spoiler (19) aus einem weicheren Material als dem der zweiten Haltemittel hergestellt ist, um das Biegen zu gestatten.

2. Scheibenwischervorrichtung (1) gemäß Anspruch 1, wobei die zweiten Haltemittel halbstarr sind.

3. Scheibenwischervorrichtung (1) gemäß Anspruch 1, wobei die ersten Haltemittel und die zweiten Haltemittel einstückig sind.

4. Scheibenwischervorrichtung (1) gemäß Anspruch 1, 2 oder 3, wobei die zweiten Haltemittel hakenförmig sind.

5. Scheibenwischervorrichtung (1) gemäß einem der vorstehenden Ansprüche 1 bis 4, wobei die Längsrille (5) einen rechteckigen Querschnitt aufweist.

6. Scheibenwischervorrichtung (1) gemäß einem der vorstehenden Ansprüche 1 bis 4, wobei die Längsrille (5) einen bogenförmigen Querschnitt aufweist.

7. Scheibenwischervorrichtung (1) gemäß einem der vorstehenden Ansprüche 1 bis 6, wobei die ersten Haltemittel in der Querschnittsansicht sich abwärts erstreckende Arme (12) aufweisen, um schwenkbar mit dem unteren Wischteil (4) in Eingriff zu stehen.

8. Scheibenwischervorrichtung (1) gemäß Anspruch 7, wobei der untere Wischteil (4) eine Wischlippe (14), einen Hals (15), der sich von der Wischlippe (14) erstreckt, wie auch einen vergrößerten Kopf (16) umfasst, der sich von dem Hals (15) erstreckt, und wobei der vergrößerte Kopf (16) in einer hohlen Kammer (13) angebracht ist, die durch die Arme (12) der ersten Haltemittel definiert ist.

9. Scheibenwischervorrichtung (1) gemäß Anspruch 8, wobei der vergrößerte Kopf (16) einen runden, elliptischen, quadratischen, rechteckigen, rhombischen oder herzförmigen Querschnitt aufweist.

10. Scheibenwischervorrichtung (1) gemäß Anspruch 8 oder 9, wobei die Arme (12) der ersten Haltemittel sich einwärts erstreckende Teile umfassen, und wobei der Hals (15) zumindest teilweise zwischen den Endteilen angeordnet ist und der vergrößerte Kopf (16) über den Endteilen angeordnet ist.

11. Scheibenwischervorrichtung (1) gemäß Anspruch 8, 9 oder 10, wobei die hohle Kammer (13) ein Schmiermittel umfasst.

## Revendications

1. Dispositif d'essuie-glace (1) comprenant un élément de support allongé élastique, ainsi qu'un balai d'essuie-glace allongé (2) destiné à être placé en butée avec un pare-brise à essuyer, ledit balai d'essuie-glace (2) comprenant une partie supérieure allongée (3) et une partie d'essuyage inférieure allongée (4) réalisée avec un matériau souple, dans lequel ladite partie supérieure (3) est prévue avec des premiers moyens de retenue pour retenir ladite partie d'essuyage inférieure (4), ainsi qu'avec des deuxièmes moyens de retenue pour retenir une bande longitudinale (6) dudit élément de support, lesdits deuxièmes moyens de retenue définissant une rainure longitudinale (5) pour insérer ladite bande longitudinale (6) à l'intérieur de cette dernière, ladite partie supérieure (3) étant prévue avec un élément élastique se présentant sous la forme d'un béquet (19) au niveau de son côté faisant face à distance à ladite partie d'essuyage inférieure (4), lequel dispositif d'essuie-glace (1) comprend un élément de raccordement (8) pour un bras oscillant (9), et dans lequel ledit bras oscillant (9) peut être raccordé de manière pivotante audit dispositif de raccordement (8) autour d'un axe de pivot à proximité de son extrémité, dans lequel lesdits deuxièmes moyens de retenue sont autorisés à fléchir latéralement vers l'extérieur suite à l'insertion de ladite bande longitudinale (6) dans ladite rainure longitudinale (5), et dans lequel ladite bande longitudinale (6) est confinée à l'intérieur de ladite rainure longitudinale (5) suite au montage dudit dispositif de raccordement (8) et/ou suite au montage des pièces de raccordement (7) fermant les extrémités externes de ladite rainure longitudinale (5) qui a une circonférence fermée, **caractérisé en ce que** ledit béquet (19) est réalisé avec un matériau plus souple que lesdits deuxièmes moyens de retenue pour permettre ledit fléchissement.

2. Dispositif d'essuie-glace (1) selon la revendication 1, dans lequel lesdits deuxièmes moyens de retenue sont semi-rigides.

3. Dispositif d'essuie-glace (1) selon la revendication 1, dans lequel lesdits premiers moyens de retenue et lesdits deuxièmes moyens de retenue sont solidaires.

4. Dispositif d'essuie-glace (1) selon la revendication 1, 2 ou 3, dans lequel lesdits deuxièmes moyens de retenue sont en forme de crochet.

5. Dispositif d'essuie-glace (1) selon l'une quelconque des revendications 1 à 4, dans lequel ladite rainure longitudinale (5) a une section transversale rectangulaire.

6. Dispositif d'essuie-glace (1) selon l'une quelconque des revendications 1 à 4 précédentes, dans lequel ladite rainure longitudinale (5) a une section transversale en forme d'arc.

7. Dispositif d'essuie-glace (1) selon l'une quelconque des revendications 1 à 6 précédentes, dans lequel lesdits premiers moyens de retenue comprennent des bras s'étendant vers le bas (12), observés en coupe, pour mettre en prise de manière pivotante ladite partie d'essuyage inférieure (4).

8. Dispositif d'essuie-glace (1) selon la revendication 7, dans lequel ladite partie d'essuyage inférieure (4) comprend une lèvre d'essuyage (14), un col (15) s'étendant à partir de ladite lèvre d'essuyage (14), ainsi qu'une tête élargie (16) s'étendant à partir dudit col (15), et dans lequel ladite tête élargie (16) est montée dans une chambre creuse (13) définie par lesdits bras (12) desdits premiers moyens de retenue.

9. Dispositif d'essuie-glace (1) selon la revendication 8, dans lequel ladite tête élargie (16) a une section transversale de forme circulaire, elliptique, carrée, rectangulaire, rhomboïdale ou en forme de coeur.

10. Dispositif d'essuie-glace (1) selon la revendication 8 ou 9, dans lequel lesdits bras (12) desdits premiers moyens de retenue comprennent des parties d'extrémité s'étendant vers l'intérieur, et dans lequel ledit col (15) est positionné au moins partiellement entre lesdites parties d'extrémité et la tête élargie (16) est positionnée au-dessus desdites parties d'extrémité.

11. Dispositif d'essuie-glace (1) selon la revendication 8, 9 ou 10, dans lequel ladite chambre creuse (13) comprend un lubrifiant.
